# EUROPEAN PATENT APPLICATION

(11) **EP 4 459 253 A1**
(43) Date of publication of application: **06.11.2024**
(21) Application number: 23740420.7
(22) Date of filing: 10.01.2023
(51) Int. Cl.: G01L 1/24, G01L 5/166, G01L 5/22

(54) **OPTICAL TACTILE SENSOR**

(30) Priority: 13.01.2022 KR 20220005109
(71) Applicant: SAMSUNG ELECTRONICS CO., LTD., Yeongtong-gu Suwon-si, Gyeonggi-do 16677 (KR)
(72) Inventor: HONG, Hyunseok, Suwon-si Gyeonggi-do 16677 (KR); GWAK, Jinpyo, Suwon-si Gyeonggi-do 16677 (KR)
(74) Representative: Appleyard Lees IP LLP
(86) International application number: PCT/KR2023/000405
(87) International publication number: WO 2023/136576

(57) **Abstract**

An optical tactile sensor module, according to various embodiments of the present disclosure, comprises: a housing; a circuit board disposed inside the housing; an elastic part comprising a first surface making contact with an object; a plurality of markers disposed on the first surface of the elastic part; and a camera unit electrically connected to the circuit board and configured to capture movements of the markers when the object approaches the first surface of the elastic part, wherein the markers may include a first marker comprising a first color, and a second marker comprising a second color different from the first color.

## Description

### [Technical Field]

Various embodiments of the disclosure relate to an optical tactile sensor, preferably, to a tactile sensor used in a robot hand.

### [Background Art]

A tactile sensor is useful for detecting, recognizing, and/or manipulating objects and is based on contact between the object and the sensor. An optical tactile sensor (OTS) is a tactile sensor that uses a camera to capture the type of contact and slippage between an object and the sensor. For example, a camera-based optical tactile sensor (OTS) may measure the displacement of an elastic part (e.g., gel) and a plurality of markers due to contact with an object using a camera, thereby measuring the force applied to the elastic part.

In particular, as the need to stably grasp or release various objects with a robot hand increases, there is an increasing need for the optical tactile sensor to precisely measure the strength of force and measure the angles of various forces in order to realize, in the robot hand, the contact information obtained using the fingers when a person grasps an object. Camera-based optical tactile sensors (OTSs) may include a function of capturing external images using a camera in addition to the force measurement.

### [Detailed Description of the Invention]

### [Technical Problem]

In general, when capturing an external image using an optical tactile sensor (OTS), if the colors of the object and captured screen are similar to the color of the marker, it is difficult to measure the displacement of the marker.

According to various embodiments of the disclosure, the optical tactile sensor is configured as markers including a plurality of colors and is able to accurately measure the displacement of the marker when capturing an external image.

### [Technical Solution]

An optical tactile sensor module according to various embodiments of the disclosure may include a housing, a circuit board disposed inside the housing, an elastic part including a first surface to come into contact with an object, a plurality of markers disposed on the first surface of the elastic part, and a camera unit electrically connected to the circuit board and capturing movements of the markers when the object approaches the first surface of the elastic part, wherein the markers may include a first marker including a first color, and a second marker including a second color different from the first color.

An electronic device according to various embodiments of the disclosure may include an optical tactile sensor module, and a circuit board electrically connected to the optical tactile sensor module, wherein the optical tactile sensor module may include a housing, a circuit board disposed inside the housing, an elastic part including a first surface to come into contact with an object, a plurality of markers disposed on the first surface of the elastic part, and a camera unit electrically connected to the circuit board and capturing movements of the markers when the object approaches the first surface of the elastic part, wherein the markers may include a first marker including a first color, and a second marker including a second color different from the first color.

### [Advantageous Effects]

According to various embodiments of the disclosure, the marker may include a plurality of markers having a plurality of colors. When an external object and markers are displayed to overlap on the screen captured by the camera unit, even if at least some colors of the captured screen are similar to at least one color of the markers, it is possible to easily distinguish between the external object and the markers, and to easily measure the displacement and movement of the marker.

According to various embodiments of the disclosure, at least some of the markers of the optical tactile sensor may use thermosensitive pigments. Therefore, the colors of the markers using thermosensitive pigments may change into a plurality of colors depending on a plurality of measurable temperature ranges. The optical tactile sensor may measure the temperature of an external object when it approaches, and identify whether or not it is in contact with the external object and the contact area thereof.

### [Brief Description of Drawings]

FIG. 1A and 1B are side views schematically illustrating an optical tactile sensor module according to an embodiment of the disclosure.
FIG. 2 is a side view schematically illustrating an optical tactile sensor module according to another embodiment of the disclosure.
FIG. 3 is a diagram illustrating an elastic part viewed from a camera unit and general markers arranged at the elastic part according to a general optical tactile sensor module.
FIG. 4A is a diagram illustrating an elastic part, which does not include general markers, viewed from a camera unit according to a general optical tactile sensor module.
FIG. 4B is a diagram illustrating a screen captured by a camera unit in the case of FIG. 4A.
FIG. 5A is a diagram illustrating an elastic part viewed from a camera unit and markers according to various embodiments of the disclosure.
FIG. 5B is a diagram illustrating a screen captured by a camera unit in the case of FIG. 5A.
FIG. 6 is a diagram illustrating an elastic part viewed from a camera unit and markers disposed on the elastic part according to various embodiments of the disclosure.
FIG. 7A is a diagram illustrating an elastic part viewed from a camera unit and markers according to various embodiments of the disclosure.
FIG. 7B is a diagram illustrating a screen captured by a camera unit in the case of FIG. 7A.
FIG. 8A is a diagram illustrating an elastic part viewed from a camera unit and markers in which the color of a first marker changes to the 1a^{th} color if the measured temperature falls within a first range according to an embodiment of the disclosure.
FIG. 8B is a diagram illustrating an elastic part viewed from a camera unit and markers in which the color of a first marker changes to the 1b^{th} color if the measured temperature falls within a second range according to an embodiment of the disclosure.
FIG. 8C is a diagram illustrating an elastic part viewed from a camera unit and markers in which the color of a first marker changes to the 1c^{th} color if the measured temperature falls within a third range according to an embodiment of the disclosure.
FIG. 9 is a diagram illustrating an elastic part viewed from a camera unit and a plurality of markers having different temperatures depending on locations according to embodiments of the disclosure.

### [Mode for Carrying out the Invention]

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program) including one or more instructions that are stored in a storage medium (e.g., internal memory or external memory) that is readable by a machine (e.g., the electronic device). For example, a processor (e.g., the processor) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

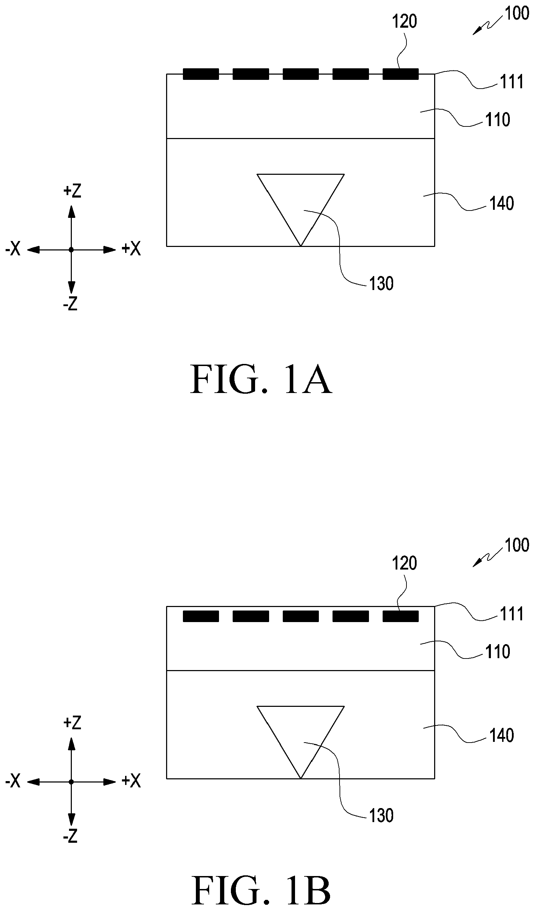

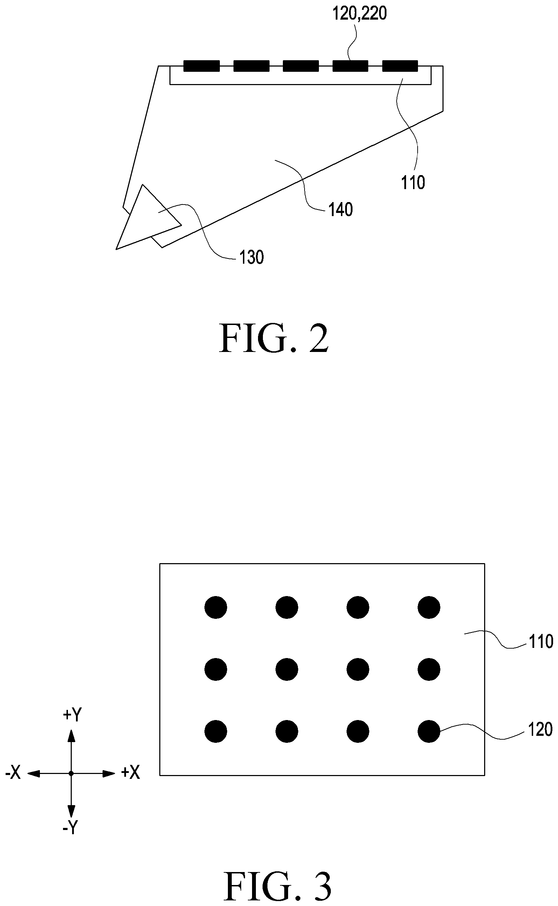

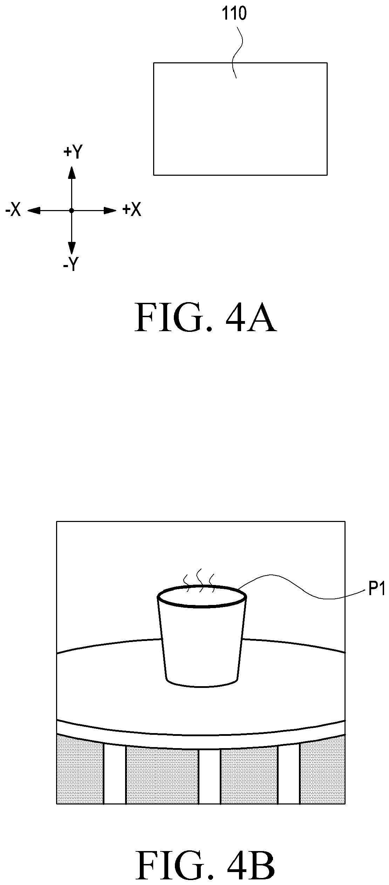

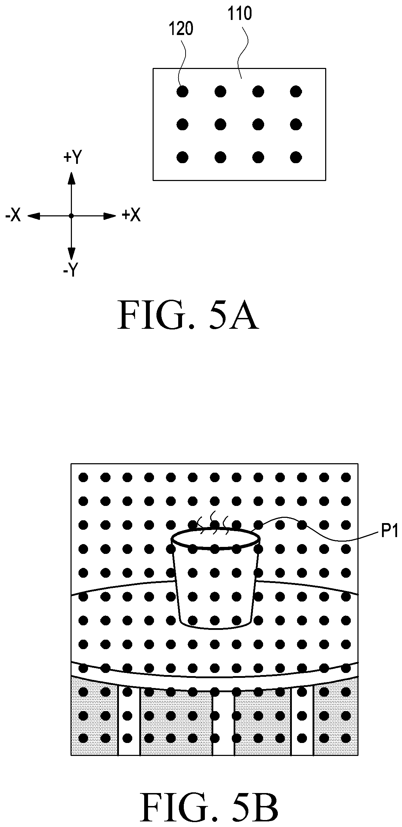

FIG. 1A and 1B are side views schematically illustrating an optical tactile sensor module 100 according to an embodiment of the disclosure. FIG. 2 is a side view schematically illustrating an optical tactile sensor module 100 according to another embodiment of the disclosure. FIG. 3 is a diagram illustrating an elastic part 110 viewed from a camera unit 130 and general markers 120 arranged at the elastic part 110 according to a general optical tactile sensor module. FIG. 4A is a diagram illustrating an elastic part 110, which does not include a general marker 120, viewed from a camera unit 130 according to a general optical tactile sensor module. FIG. 4B is a diagram illustrating a screen captured by a camera unit 130 in the case of FIG. 4A. FIG. 5A is a diagram illustrating an elastic part 110 viewed from a camera unit 130 and markers 120 according to various embodiments of the disclosure. FIG. 5B is a diagram illustrating a screen captured by a camera unit 130 in the case of FIG. 5A.

Referring to FIGS. 1A to 5B, the optical tactile sensor module 100 may include an elastic part 110, general markers 120, a camera unit 130, and a housing 140.

In FIGS. 1A to 5B, "X" may indicate the longitudinal direction of the optical tactile sensor module 100. "Y" may indicate the width direction of the optical tactile sensor module 100. "Z" may indicate the thickness direction of the optical tactile sensor module 100. Additionally, in an embodiment of the disclosure, "+X" may indicate the right direction of the optical tactile sensor module 100, and "-X" may indicate the left direction of the optical tactile sensor module 100. In an embodiment of the disclosure, "+Y" may indicate the forward direction of the optical tactile sensor module 100, and "-Y" may indicate the backward direction of the optical tactile sensor module 100. In an embodiment of the disclosure, "+Z" may indicate the upward direction of the optical tactile sensor module 100, and "-Z" may indicate the downward direction of the optical tactile sensor module 100.

According to various embodiments, the optical tactile sensor module 100 may identify an external object (e.g., the external object P1 in FIG. 4B) near the optical tactile sensor module 100, measure the temperature of the external object, and obtain tactile information of the external object (e.g., the external object P1 in FIG. 4B).

According to an embodiment, the optical tactile sensor module 100 may be electrically and/or physically connected to another external device (e.g., an industrial robot) through a connection part (not shown). The optical tactile sensor module 100 may be controlled by a connected external electronic device (e.g., an industrial robot). For example, the positional movement of the optical tactile sensor module 100 or the internal operation of the optical tactile sensor module 100 may be controlled by an electrical signal from the connected external electronic device. For example, the optical tactile sensor module 100 may obtain tactile information when an industrial robot grasps an object using a hand mounted to the industrial robot. In addition, the industrial robot may identify an external object approaching the optical tactile sensor module 100 and measure the temperature thereof using the optical tactile sensor module 100, and may grab the object, thereby obtaining tactile information about the object. A circuit board may be electrically connected to the camera unit 130. In addition, a processor may be programmed to process image information obtained by the camera unit 130. In another embodiment, the optical tactile sensor module 100 may be connected to a power source provided in the external electronic device or a processor of the external electronic device. According to an embodiment, the optical tactile sensor module 100 may include an internal power source or may be operated by being connected to an external power source. However, the external electronic device is not limited to the industrial robot and may have various design changes.

According to various embodiments, the elastic part 110 may be formed of an elastic material. For example, the optical tactile sensor module 100 may come into contact with an external object (e.g., the external object P1 in FIG. 4B) through the elastic part 110 and obtain tactile information of the object. According to various embodiments, the elastic part 110 may be formed of an optically transparent elastic material (e.g., gel). For example, although it is made of a silicone resin such as silicone rubber, the elastic body may be made of any optically transparent material suitable therefor, such as other types of rubber and elastomers. According to various embodiments, a first surface 111 of the elastic part 110 may be optically translucent.

According to various embodiments, the general markers 120 may be disposed adjacent to the first surface 111 of the elastic part 110. According to an embodiment, the general markers 120 may be disposed on the first surface 111 of the elastic part 110. For example, they may be printed on the elastic part 110. According to another embodiment, the general markers 120 may be disposed inside the elastic part 110. However, the position of the elastic part 110 is not limited to the above embodiment, and may be designed in various ways. Referring to FIG. 3, the general markers 120 may include a plurality of markers arranged at regular intervals. The plurality of markers may be arranged side by side on the same plane (e.g., the XY plane in FIG. 3). For example, when the elastic part 110 is viewed from the camera unit 130, the markers 120 including a plurality of markers be arranged at regular intervals inside the elastic part 110 along the X and Y axes. According to various embodiments, the markers 120 may include circular markers. According to an embodiment, the arrangement of the plurality of markers 120 may not be regular. In the case where a sensor, which detects the movement of the plurality of markers 120, detects the positions of the plurality of markers 120, the arrangement of the plurality of markers 120 may be designed in various ways.

According to various embodiments, the camera unit 130 may photograph the elastic part 110 and the movement of the general marker 120 according to contact with an external object. For example, the movement of the marker may include at least one of displacement, deformation, and tilt of the marker. According to various embodiments, in the case where the elastic part 110 is transparent or translucent, the external object P1, as well as the markers 120, may be shown on the captured screen of the camera unit 130.

According to various embodiments, the camera unit 130 may be disposed to face in the upward direction (e.g., the +Z direction in FIG. 1), spaced a predetermined distance apart from the elastic part 110, and positioned on the opposite side of the side of the elastic part 110 to which external pressure is applied. According to an embodiment, the camera unit 130 may be located at the center of the elastic part 110, based on the XY plane. According to another embodiment, as shown in FIG. 2, the camera unit 130 may be located on one side of the elastic part, based on the XY plane. However, the position of the camera unit 130 is not limited to the above embodiment and may be designed in various ways depending on the sizes or arrangement relationship of surrounding structures.

According to various embodiments, the camera unit 130 may be a digital camera, that is, a camera for outputting image data as an electrical signal. For example, it may be a CCD camera. However, the camera unit 130 of the disclosure is not limited to the CCD camera, and for example, a digital camera using a C-MOS-type image sensor may be used.

According to various embodiments, the housing 140 may constitute at least a portion of the exterior of the optical tactile sensor module 100 and fix the positions of the elastic part 110 and the camera unit 130. At least a portion of the housing 140 may be in contact with at least a portion of the elastic part 110. For example, at least a portion of the housing 140 may be in contact with one surface facing in a direction (e.g., the -Z direction in FIG. 1) opposite the direction in which the first surface 111 of the elastic part 110 faces. According to an embodiment, referring to FIG. 1, the housing 140 may be configured as one surface perpendicular and/or horizontal to the first surface 111 of the elastic part 110. According to another embodiment, referring to FIG. 2, the housing 140 may include one surface inclined at a specified angle with the first surface 111 of the elastic part 110. However, the shape of the housing 140 is not limited to the above embodiment and may be designed in various ways depending on the sizes or arrangement relationship of surrounding structures. According to various embodiments, referring to FIG. 4B, if the external object P1 approaches the first surface of the elastic part 110, the external object may be displayed on the screen captured by the camera unit 130. In general, referring to FIG. 5B, in the case of the general optical tactile sensor module 100 including the general markers 120 and the elastic part 110, the external object and the general markers 120 may be displayed to overlap each other on the screen captured by the camera unit 130. In this case, if at least some colors of the captured screen are similar to the colors of the general markers 120, it may be difficult to measure the displacement and movement of the general markers 120. For example, in the case where the general markers 120 are black, if at least a portion of the captured screen has a dark color similar to the color of the general marker 120, it may be difficult to measure the displacement of the marker. For example, in the case where the general markers 120 are black, if the external object P1 and/or at least a portion of the scene displayed on the captured screen of the camera unit 130 has a dark color similar to the color of the marker 120, it may be difficult to measure the displacement of the marker.

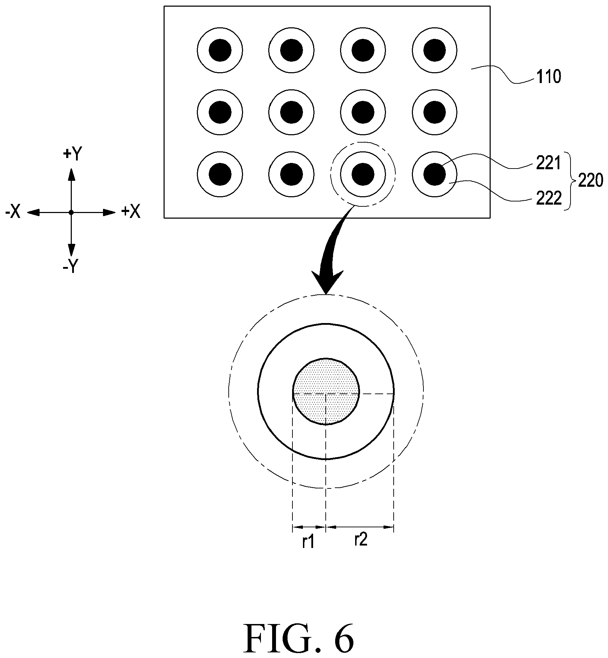

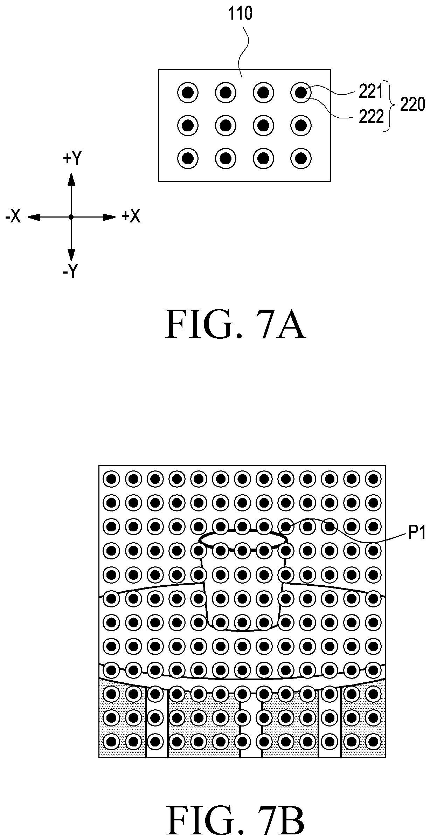

FIG. 6 is a diagram illustrating an elastic part 110 viewed from a camera unit 130 and markers 220 disposed on the elastic part 110 according to various embodiments of the disclosure. FIG. 7A is a diagram illustrating an elastic part 110 viewed from a camera unit 130 and markers 220 according to various embodiments of the disclosure. FIG. 7B is a diagram illustrating a screen captured by a camera unit 130 in the case of FIG. 7A.

Referring to FIGS. 6 to 7B, the optical tactile sensor module 100 may include an elastic part 110, markers 220, a camera unit 130, and a housing 140.

The configurations of the elastic part 110, markers 220, camera unit 130, and housing 140 in FIGS. 6 to 7B are the same as those of the elastic part 110, markers 120, camera unit 130, and housing 140 in FIGS. 1 to 4B.

In FIGS. 6 to 7B, "X" may indicate the longitudinal direction of the optical tactile sensor module 100. "Y" may indicate the width direction of the optical tactile sensor module 100. "Z" may indicate the thickness direction of the optical tactile sensor module 100. Additionally, in an embodiment of the disclosure, "+X" may indicate the right direction of the optical tactile sensor module 100, and "-X" may indicate the left direction of the optical tactile sensor module 100. In an embodiment of the disclosure, "+Y" may indicate the forward direction of the optical tactile sensor module 100, and "-Y" may indicate the backward direction of the optical tactile sensor module 100. In an embodiment of the disclosure, "+Z" may indicate the upward direction of the optical tactile sensor module 100, and "-Z" may indicate the downward direction of the optical tactile sensor module 100.

According to various embodiments, the marker 220 may include a plurality of areas having different colors to clearly distinguish the same from external objects. For example, the markers constituting the markers 220 may include a first marker 221 including a first color, and a second marker 222 including a second color different from the first color. For example, the first marker 221 may be black. For example, the second marker 222 may be white. In the case where the marker 220 has a single color, if an external object is similar to the single color, it is difficult to detect the external object, so a plurality of colors may be used to solve this problem. According to various embodiments, the first marker 221 may be a circular marker having a radius of a first length r1. The second marker 222 may be circular and may be shaped to exclude a portion that overlaps with the first marker 221, and may have the same center as the first circular marker 221 and a radius of a second length r2. The radius of the second length r2 of the second marker 222 may be greater than the radius of the first length r1 of the first marker 221. For example, the second marker 222 may be a donut-shaped marker, which surrounds the first marker 221, having a predetermined thickness of "second length r2 - first length r1". However, the shapes of the first marker 221 and/or second marker 222 are not limited to the above embodiment and may be designed in various ways.

According to various embodiments, referring to FIG. 7B, if an external object (e.g., the external object P1 in FIG. 7B) approaches the first surface of the elastic part 110, the external object and the plurality of markers 220 may be displayed to overlap each other on the screen captured by the camera unit 130. In this case, if at least some colors of the captured screen are similar to the first color of the first marker 221, since the second color including the second color is located at the edge of the marker 220, the external object (e.g., the external object P1 in FIG. 7B) and the marker 220 may be easily distinguish, and the displacement and movement of the marker 220 may be easily measured. If at least some colors of the captured screen are similar to the second color of the second marker 222, since the first color including the first color is located at the center of the marker 220, the external object (e.g., the external object P1 in FIG. 7B) and the marker 220 may be easily distinguish, and the displacement and movement of the marker 220 may be easily measured.

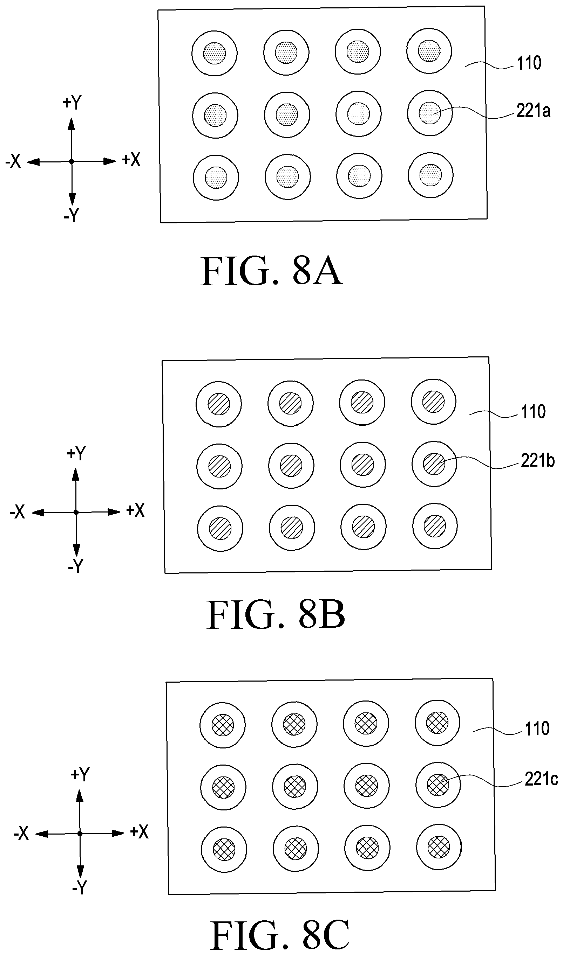

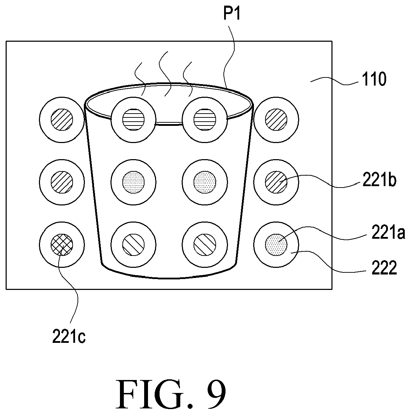

FIG. 8A is a diagram illustrating an elastic part 110 viewed from a camera unit 130 and markers 220 in which the color of a first marker 221 changes to the 1a^{th} color if the measured temperature falls within a first range according to an embodiment of the disclosure. FIG. 8B is a diagram illustrating an elastic part 110 viewed from a camera unit 130 and markers 220 in which the color of a first marker 221 changes to the 1b^{th} color if the measured temperature falls within a second range according to an embodiment of the disclosure. FIG. 8C is a diagram illustrating an elastic part 110 viewed from a camera unit 130 and markers 220 in which the color of a first marker 221 changes to the 1c^{th} color if the measured temperature falls within a third range according to an embodiment of the disclosure. FIG. 9 is a diagram illustrating an elastic part 110 viewed from a camera unit 130 and a plurality of markers 220 having different temperatures depending on locations according to embodiments of the disclosure.

Referring to FIGS. 8A to 9, the optical tactile sensor module 100 may include an elastic part 110 and a marker 220. All or some of the configurations of the elastic part 110 and the marker 220 in FIGS. 7A to 8 may be the same as the configurations of the elastic part 110 and the marker 220 in FIG. 5.

In FIGS. 8A to 9, "X" may indicate the longitudinal direction of the optical tactile sensor module 100. "Y" may indicate the width direction of the optical tactile sensor module 100. Additionally, in an embodiment of the disclosure, "+X" may indicate the right direction of the optical tactile sensor module 100, and "-X" may indicate the left direction of the optical tactile sensor module 100. In an embodiment of the disclosure, "+Y" may indicate the forward direction of the optical tactile sensor module 100, and "-Y" may indicate the backward direction of the optical tactile sensor module 100.

According to various embodiments, the first color of the first marker 221 may include a thermosensitive pigment whose color changes depending on temperature. For example, measurable temperature may be divided into a plurality of ranges, and a plurality of colors may be specified according to the ranges. Thermosensitive pigments are pigments that change their colors depending on temperature, and the color begins to disappear as the temperature rises and returns back to its original color when the temperature falls again. Thermosensitive pigments change colors at intervals of 2 to 10 degrees C between -15 degrees C and 70 degrees C, and there are various grades of pigments, such as pigments that change colors when the temperature rises by 2 degrees C from 20 degrees C, pigments that change colors at 31 degrees C, 43 degrees C, and 65 degrees C, or the like. In the case of TP of 31 degrees C, which is a common thermosensitive pigment, the color disappears at 33 degrees C and returns to the original color when the temperature is lowered to the original temperature. Specifically, the blue thermosensitive pigment (BT-20), which changes at 20 degrees C, appears blue at 20 degrees C or less, and the color disappears at 22 degrees C. The orange thermosensitive pigment (OT-31), which changes at 31 degrees C, appears orange at 31 degrees C, and the color completely disappears at 35 degrees C when heated. The red thermosensitive pigment (RT-43), which changes at 43 degrees C, appears red at 43 degrees C, and the color completely disappears at 47 degrees C when heated. In addition, there are various colors of thermosensitive pigments, and different colors may be obtained through a combination of two types of thermosensitive pigments or a combination of thermosensitive pigments and regular pigments, and different products may be obtained through a combination of three or more thermosensitive pigments with different temperatures, which may meet various requirements of products depending on the development. For example, a combination of a 20 degrees C-thermosensitive pigment, a 31 degrees C- thermosensitive pigment, and a 43 degrees C- thermosensitive pigment may be configured such that the color changes at 25 degrees C, changes to another color at 35 degrees C, and then changes to another color when the temperature rises 45 degrees C or above. However, the above thermosensitive pigments are merely illustrative, and the disclosure is not limited thereto, and it is obvious to persons who are skilled in the art (hereinafter referred to as "those skilled in the art") that various commercially available thermosensitive pigments may be appropriately selected and used. In addition, although the thermosensitive pigment is selected in the temperature range of -15 to 70 degrees C, it is obvious to those skilled in the art that thermosensitive pigments may be selected in a temperature range that does not affect other elements of the optical tactile sensor module 100, considering that the first marker 221 of the marker 120 is used in the optical tactile sensor module 100.

According to an embodiment, referring to FIG. 8A, if a temperature in the first range is measured, the first marker 221 having the first color may change to the 1a^{th} marker 221a having the 1a^{th} color. Referring to FIG. 8B, if a temperature in the second range different from the first range is measured, the first marker 221 having the first color may change to the 1b^{th} marker 221b having the 1b^{th} color. Referring to FIG. 8C, if a temperature in the third range different from the first range and second range is measured, the first marker 221 having the first color may change to the 1c^{th} marker 221c having the 1c^{th} color. However, the temperature range in which the color changes is not limited to the above embodiment and may be designed in various ways depending on the intended use.

According to various embodiments, if an external object (e.g., the external object P1 in FIG. 8) approaches the first surface of the elastic part 110, the measured temperature may vary depending on the location of the marker 220. According to FIG. 9, if a specified portion includes an external object (e.g., the external object P1 in FIG. 8) having a specific temperature, the temperature measured in the marker 220 close to the portion may be different from the temperature measured in the marker 220 far from the portion. Therefore, by measuring the temperature depending on the location, it is possible to identify the contact of the external object (e.g., the external object P1 in FIG. 8) and the contact area thereof.

An optical tactile sensor module (e.g., the optical tactile sensor module 100 in FIG. 1) according to various embodiments of the disclosure may include a housing (e.g., the housing 140 in FIG. 1), a circuit board disposed inside the housing, an elastic part (e.g., the elastic part 110 in FIG. 1) including a first surface (e.g., the first surface 111 in FIG. 1) to come into contact with an object, a plurality of markers (e.g., the plurality of markers 120 in FIG. 1) disposed on the first surface of the elastic part, and a camera unit (e.g., the camera unit 130 in FIG. 1) electrically connected to the circuit board and configured to capture a movement of at least some of the plurality of markers when the object approaches the first surface of the elastic part, wherein the markers may include a first marker (e.g., the first marker 221 in FIG. 6) including a first color, and a second marker (e.g., the second marker 222 in FIG. 6) including a second color different from the first color.

In various embodiments, the first marker may be a circular marker having a radius with a first length (e.g., the first length r1 in FIG. 6).

In various embodiments, the second marker may be formed to surround the edge of the first marker, and the outer perimeter of the second marker may form a circle having a radius with a second length (e.g., the second length r2 in FIG. 6) longer than the first length.

In various embodiments, the first marker may include a thermosensitive pigment.

In various embodiments, the first color of the first marker may change to a 1a^{th} color if a temperature within a first range is measured, change to a 1b^{th} color if a temperature within a second range higher than the temperature in the first range is measured, and change to a 1c^{th} color if a temperature within a third range higher than the temperature in the second range is measured.

In various embodiments, the plurality of markers may be arranged at regular intervals.

In various embodiments, the elastic part may include an optically transparent material such as at least one of a silicone resin and an elastomer.

In various embodiments, the elastic part may include an optically translucent material.

In various embodiments, the markers and the object may be displayed on a screen captured by the camera unit.

In various embodiments, the movement of the marker may include at least one of displacement, deformation, or tilt of the marker.

In various embodiments, a connection part to be connected to an external electronic device may be further included.

In various embodiments, the external electronic device may be an industrial robot.

An electronic device according to various embodiments of the disclosure may include an optical tactile sensor module and a circuit board electrically connected to the optical tactile sensor module, wherein the optical tactile sensor module may include a housing, an elastic part including a first surface to come into contact with an object, a plurality of markers disposed on the first surface of the elastic part, and a camera unit configured to capture movements of at least some of the markers when the object approaches the first surface of the elastic part, wherein the markers may include a first marker including a first color, and a second marker including a second color different from the first color.

In various embodiments, the first marker may be a circular marker having a radius with a first length.

In various embodiments, the second marker may be formed to surround the edge of the first marker, and the outer perimeter of the second marker may form a circle having a radius with a second length greater than the first radius.

In various embodiments, the first marker may include a thermosensitive pigment.

In various embodiments, the first color of the first marker may change to a 1a^{th} color if a temperature in a first range is measured, change to a 1b^{th} color if a temperature in a second range higher than the temperature in the first range is measured, and change to a 1c^{th} color if a temperature in a third range higher than the temperature in the second range is measured.

In various embodiments, the plurality of markers may be arranged at regular intervals.

In various embodiments, the elastic part may include an optically transparent material such as at least one of a silicone resin and an elastomer.

In various embodiments, the elastic part may include an optically translucent material.

The optical tactile sensor (e.g., the optical tactile sensor module 100 in FIG. 1) of various embodiments of the disclosure described above is not limited to the above-described embodiments and drawings, and it will be obvious to those skilled in the art to which the disclosure pertains that various modifications, substitutions, and changes are possible within the scope of the disclosure.

## Claims

1. An optical tactile sensor module comprising:
a housing;
an elastic part comprising a first surface for contacting an object;
a plurality of markers arranged adjacent to the first surface of the elastic part; and
a camera unit configured to capture a movement of at least some of the plurality of markers first surface to measure a magnitude of force generated upon contact with the object,
wherein the plurality of markers comprise:
a first marker comprising a first color; and
a second marker comprising a second color different from the first color.

2. The optical tactile sensor module according to claim 1, wherein the first marker is a circular marker having a radius of a first length.

3. The optical tactile sensor module according to claim 2, wherein the second marker is formed to surround an edge of the first marker, and
wherein an outer perimeter of the second marker forms a circle having a radius of a second length longer than the first length.

4. The optical tactile sensor module according to claim 1, wherein the first marker comprises a thermosensitive pigment.

5. The optical tactile sensor module according to claim 1, wherein the first color of the first marker:
changes to a 1a color in case that a temperature within a first range is measured;
changes to a 1b color in case that a temperature within a second range which is higher than the first range is measured; and
changes to a 1c color in case that a temperature within a third range higher than the second range is measured.

6. The optical tactile sensor module according to claim 1, wherein the plurality of markers are arranged with at least one specified interval.

7. The optical tactile sensor module according to claim 1, wherein the elastic part comprises an optically transparent material.

8. The optical tactile sensor module according to claim 1, wherein the first surface of the elastic part is optically translucent.

9. The optical tactile sensor module according to claim 1, wherein the markers and the object are shown in the screen captured by the camera unit.

10. The optical tactile sensor module according to claim 1, wherein the movement of the marker comprises at least one of displacement, deformation, or tilt of the marker.

11. The optical tactile sensor module according to claim 1, further comprising a connection part to be connected to an external electronic device.

12. The optical tactile sensor module according to claim 11, wherein the external electronic device is a robot.

13. An electronic device comprising:
an optical tactile sensor module; and
a circuit board electrically connected to the optical tactile sensor module,
wherein the optical tactile sensor module comprises:
a housing;
an elastic part comprising a first surface for contacting an object;
a plurality of markers arranged on the first surface of the elastic part; and
a camera unit configured to capture a movement of at least some of the plurality of markers when the object approaches the first surface of the elastic part, and
wherein the plurality of markers comprises:
a first marker comprising a first color; and
a second marker comprising a second color different from the first color.

14. The electronic device according to claim 13, wherein the first marker is a circular marker having a radius of a first length.

15. The electronic device according to claim 14, wherein the second marker is formed to surround an edge of the first marker, and
wherein an outer perimeter of the second marker forms a circle having a radius of a second length longer than the first length.
